# EUROPÄISCHE PATENTSCHRIFT

(11) **EP 3 495 092 B1**
(45) Veröffentlichungstag und Bekanntmachung des Hinweises auf die Patenterteilung: **19.05.2021**
(21) Anmeldenummer: 18210424.0
(22) Anmeldetag: 05.12.2018
(51) Int. Cl.: B24B 11/02, B23Q 7/04, B23Q 3/18, B24B 29/04, B24B 11/00, B24B 27/00, B24B 41/06

(54) **ENDBEARBEITUNGSVORRICHTUNG MIT GREIFVORRICHTUNG**
FINISHING DEVICE WITH GRIPPING DEVICE
DISPOSITIF DE TRAITEMENT FINAL POURVU DE DISPOSITIF DE PRÉHENSION

(30) Priorität: 08.12.2017 DE 102017129209
(43) Veröffentlichungstag der Anmeldung: 12.06.2019
(73) Patentinhaber: Thielenhaus Technologies GmbH, 42285 Wuppertal (DE)
(72) Erfinder: Steinwender, Holger, 42289 Wuppertal (DE)
(74) Vertreter: Feucker, Max Martin

(56) Entgegenhaltungen:
- EP-A1- 1 563 953
- EP-A2- 2 047 949
- WO-A1-97/38650
- KR-B1- 101 508 093

## Beschreibung

Die vorliegende Erfindung betrifft eine Vorrichtung zur Endbearbeitung eines Werkstücks, wobei das Werkstück einen sphärischen Werkstückoberflächenabschnitt und eine Aufnahmebohrung aufweist, umfassend eine Dornvorrichtung, auf die das Werkstück mit der Aufnahmebohrung aufsetzbar ist, und eine Bearbeitungsstation, in der der sphärische Werkstückoberflächenabschnitt des auf die Dornvorrichtung aufgesetzten Werkstücks endbearbeitbar ist. Die Erfindung betrifft insbesondere eine Vorrichtung zur Endbearbeitung von Hüftgelenksimplantaten.

Zur Bearbeitung der kugelkopfförmigen Hüftgelenksimplantate werden diese zunächst auf einen starren Dorn oder Dorn mit Spannzange aufgesetzt, woraufhin der Dorn in eine Werkstückhalterung einer Endbearbeitungsvorrichtung eingebracht wird. Zur Finishbearbeitung wird in der Regel sowohl das Werkstück als auch das insbesondere als Topfscheibe ausgebildete Finishwerkzeug rotatorisch angetrieben. Nach der Finishbearbeitung wird das Hüftgelenksimplantat zusammen mit dem Dorn manuell aus der Bearbeitungsvorrichtung herausgenommen und manuell fertigpoliert. Um das Hüftgelenksimplantat nach dem Fertigpolieren von dem Dorn zu entfernen, ist es derzeit erforderlich, dass die fertigpolierte sphärische Werkstückoberfläche berührt wird, um das Hüftgelenksimplantat beispielsweise in einer Transportvorrichtung zu platzieren. Durch das Berühren der fertigpolierten sphärischen

Werkstückoberfläche weist diese ungewünschte Spuren auf, die den Anschein vermitteln, dass die Werkstückoberfläche nicht den gewünschten Anforderungen entspricht. Zudem ist aufgrund der vielen manuellen Schritte ein hoher Personalbedarf erforderlich. Wenn zudem eine Vielzahl von Hüftgelenksimplantaten nacheinander bearbeitet werden sollen, ist es zudem erforderlich, eine entsprechend große Anzahl an Dornvorrichtungen vorzuhalten, auf denen die Hüftgelenksimplantate in die Bearbeitungsmaschine eingebracht werden. Eine solche Vorrichtung mit den Merkmalen des Oberbegriffs des Anspruchs 1 ist beispielsweise aus EP 1 563 953 A1 bekannt.

Aufgabe der vorliegenden Erfindung ist es daher, die mit Bezug zum Stand der Technik geschilderten Nachteile zumindest teilweise zu beseitigen und insbesondere eine Vorrichtung zur Endbearbeitung anzugeben, mit der die Endbearbeitung von Hüftgelenksimplantaten vereinfacht ist, ohne dass die endbearbeitete sphärische Werkstückoberfläche ungewünschte Spuren aufweist.

Gelöst wird die Aufgabe durch eine Vorrichtung mit den Merkmalen des unabhängigen Anspruchs. Vorteilhafte Weiterbildungen der Vorrichtung sind in den abhängigen Ansprüchen und in der Beschreibung angegeben, wobei einzelne Merkmale der vorteilhaften Weiterbildungen in technisch sinnvollerweise beliebig miteinander kombinierbar sind.

Gelöst wird die Aufgabe insbesondere durch eine Vorrichtung mit den eingangs genannten Merkmalen, die eine Greifvorrichtung mit mehreren Greifelementen zum Abnehmen des Werkstücks von der Dornvorrichtung aufweist, wobei die Greifelemente so ausgebildet sind, dass die Greifelemente beim Abnehmen ausschließlich mit Flächen des Werkstücks in Kontakt kommen, die nicht endbearbeitet sind.

Die Erfindung sieht in ihrem Grundgedanken also vor, dass die Vorrichtung eine insbesondere automatisch betätigbare Greifvorrichtung umfasst, die ein Werkstück zum Transport nur an denjenigen Flächen berührt, die nicht endbearbeitet sind beziehungsweise nicht endbearbeitet werden.

Die Erfindung betrifft insbesondere eine Vorrichtung zur Endbearbeitung eines kugelkopfförmigen Bauteils eines künstlichen Hüftgelenks. Das kugelkopfförmige Bauteil weist einen kugelförmigen Werkstückoberflächenabschnitt und eine im Wesentlichen ebene Fläche auf, wobei die Aufnahmebohrung in der ebenen Fläche ausgebildet ist. Die Aufnahmebohrung ist insbesondere als Konus ausgebildet. In dieser Aufnahmebohrung wird vor oder während der Implantation in der Regel der Hüftschaft des künstlichen Hüftgelenks eingesetzt. Während der Endbearbeitung ist hingegen die Dornvorrichtung in die Aufnahmebohrung eingeführt, um das Werkstück zu halten. Die Greifelemente, die auch als Greiferfinger bezeichnet werden können, sind insbesondere so geformt, dass nur die ringförmige, im wesentlichen ebene Fläche oder die Innenoberfläche der Aufnahmebohrung von dem Greifelement berührt wird.

In einer bevorzugten Ausführungsform weist mindestens ein Greifelement, bevorzugt alle Greifelemente, einen Auflagebereich auf, auf der eine an die Aufnahmebohrung angrenzende plane Fläche des Werkstücks beim Abnehmen aufliegt. Insbesondere ist diese an die Aufnahmebohrung angrenzende plane Fläche ringförmig ausgebildet. Der Auflagebereich des Greifelements kann punktförmig, strichförmig oder flächig ausgebildet sein. Entscheidend ist, dass das Werkstück mit der planen Fläche auf dem Auflagebereich während des Transportes aufliegen kann und somit die endbearbeitete Werkstückoberfläche von dem Greifelement nicht berührt wird.

Erfindungsgemäß weist das mindestens eine Greifelement oder mindestens ein anderes Greifelement oder alle Greifelemente einen Eingriffsbereich auf, der in die Aufnahmebohrung einführbar ist. Dieser Eingriffsbereich des Greifelements kann beispielsweise beim Transport des Werkstückes mit einer Endbeziehungsweise Stirnfläche der Aufnahmebohrung in Kontakt sein. Zusätzlich oder alternativ kann vorgesehen sein, dass der Eingriffsbereich beim Transport des Werkstücks mit einer Umfangsfläche der Aufnahmebohrung in Kontakt ist. Hierzu weist eine der Umfangsfläche zugewandte Oberfläche des Eingriffsbereichs einen ähnlichen oder identischen Winkel zu der planen Fläche auf wie die Umfangsfläche der Aufnahmebohrung. Auch der Eingriffsbereich kann so ausgebildet sein, dass er während der Handhabung des Werkstücks punktförmig, linienförmig oder flächig mit einer die Aufnahmebohrung begrenzenden Fläche in Anlage ist. Bevorzugt schließt sich der Eingriffsbereich an den Auflagebereich an und steht in vertikaler Richtung nach oben über den Auflagebereich hervor.

Die Vorrichtung ist insbesondere so eingerichtet, dass der Eingriffsbereich des Greifelements beim Abnehmen in Kontakt mit einer Innenumfangsfläche der Aufnahmebohrung bringbar ist. Die Greifvorrichtung ist insbesondere so ausgebildet, dass die Greifelemente in vertikaler Richtung einzeln oder gemeinsam durch einen Antrieb bewegbar sind. Zudem ist die Greifvorrichtung so ausgebildet, dass die Greifelemente in einer mit Bezug zu der Dornvorrichtung radialen Richtung zugestellt werden können. Somit ist es möglich, dass die Greifelemente die Werkstücke untergreifen und von der Dornvorrichtung abheben können.

Damit die Greifelemente in die Aufnahmebohrung eingreifen können, weist die Dornvorrichtung insbesondere in ihrer axialen Richtung verlaufende Schlitze auf, in die die Greifelemente während des Abnehmens eingreifen.

In einer einfachen Ausführungsform kann die Dornvorrichtung aus einem insbesondere einteiligen starren Dorn bestehen, in welchem Fall die Schlitze in dem Dorn selbst ausgebildet sind.

In einer bevorzugten Ausführungsform umfasst die Dornvorrichtung eine von der Vorrichtung automatisch betätigbare Spannzange. Eine solche Spannzange ist insbesondere aufgrund von Federn selbstspannend, wobei vor dem Aufstecken des Werkstücks beziehungsweise vor dem Abnehmen des Werkstücks die Spannzange mittels einer entsprechenden Vorrichtung entspannt wird. Das Werkstück kann also ohne große Kraftbeaufschlagung auf die Dornvorrichtung aufgesetzt und entnommen werden, wobei das Werkstück aufgrund der Spannzange während der Bearbeitung drehfest zu der Dornvorrichtung fixiert ist. Bei Vorhandensein einer Spannzange können die Schlitze in der Spannzange und/oder dem Dorn selbst ausgebildet sein. Eine solche Spannzange ist mit dem Vorteil verbunden, dass nur die jeweils zur Bearbeitung in der Vorrichtung angeordneten Werkstücke auf einer Dornvorrichtung platziert werden müssen. Es ist dann nicht mehr erforderlich, dass die Werkstücke vor dem Einbringen in die Vorrichtung auf einer Dornvorrichtung fixiert werden. Somit kann die Anzahl der erforderlichen Dornvorrichtungen reduziert werden. Somit entfällt aber auch der Aufwand, um die Werkstücke außerhalb der Vorrichtung manuell auf die Dornvorrichtungen aufzubringen und zu entfernen. Zum Einbringen der Werkstücke in die Vorrichtung kann auch die Greifvorrichtung verwendet werden.

Die Vorrichtung und insbesondere die Bearbeitungsstation umfasst bevorzugt ein erstes Werkzeug zur spanabhebenden Finishbearbeitung des Werkstücks und ein zweites Werkzeug zum Fertigpolieren des Werkstücks, die nacheinander zur Bearbeitung auf das Werkstück zugestellt werden können. Es kann auch noch ein weiteres Werkzeug zum Vorpolieren des Werkstücks vorgesehen sein, mit welchem das Werkstück nach der Finishbearbeitung und vor dem Fertigpolieren bearbeitet wird. Die Werkzeughalterungen können für die Bearbeitung rotatorisch antreibbar sein.

Alternativ kann die Vorrichtung eine erste Bearbeitungsstation zur Finishbearbeitung des Werkstücks und eine zweite Bearbeitungsstation zum Fertigpolieren des Werkstücks umfassen. Gegebenenfalls kann auch noch eine weitere Bearbeitungsstation vorgesehen sein, in der das Werkstück nach der Finishbearbeitung und vor dem Fertigpolieren vorpoliert wird. In der ersten Bearbeitungsstation ist insbesondere ein spanabhebendes Werkzeug angeordnet, welches insbesondere in einem Bindemittel gebundene Körner aufweist, wobei die Körner Schneidflächen zur Spanabhebung ausbilden. Insbesondere ist ein solches Finishbearbeitungswerkzeug als Topfscheibe ausgebildet.

Die Vorrichtung umfasst insbesondere eine Halterung für die Dornvorrichtung, wobei die Halterung mittels eines Rotationsantriebs rotatorisch antreibbar ist. Die Dornvorrichtung kann in der einen Bearbeitungsstation rotatorisch angetrieben werden, während die unterschiedlichen Werkzeuge in Anlage mit dem Werkstück gebracht werden. Alternativ ist die Vorrichtung insbesondere so ausgebildet, dass die Halterung für die Dornvorrichtung den verschiedenen Bearbeitungsstationen zugeführt werden kann, so dass das Werkstück auf genau einer Dornvorrichtung den unterschiedlichen Bearbeitungsstationen zuführbar ist.

Die Werkzeughalterung der Bearbeitungsstation ist insbesondere auf die Werkstückoberfläche des Werkstücks zustellbar und rotatorisch antreibbar.

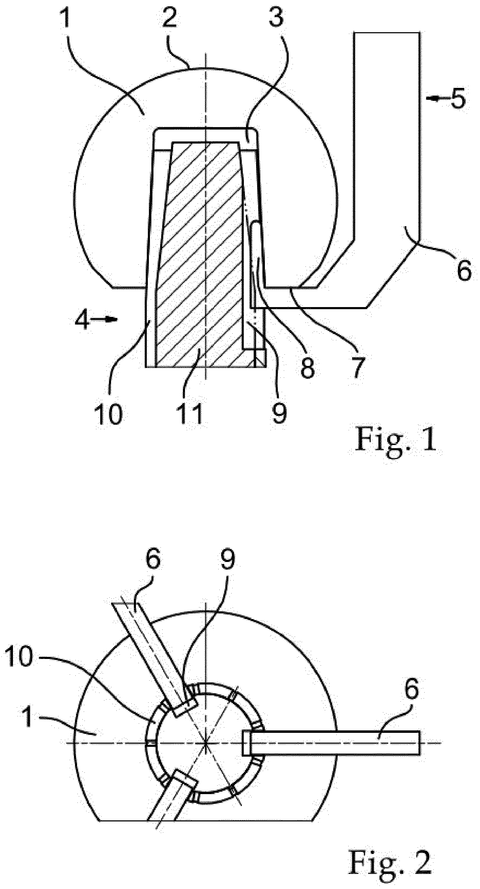

Die Erfindung sowie das technische Umfeld werden nachfolgend anhand der Figuren beispielhaft erläutert. Es zeigen schematisch
- Figur 1:: eine Greifvorrichtung einer Endbearbeitungsvorrichtung in einer horizontalen Schnittebene und
- Figur 2:: einen Ausschnitt der Greifvorrichtung in einer horizontalen Schnittebene.

In den Figuren ist eine Dornvorrichtung 4 dargestellt, die einen starren Dorn 11 und eine Spannzange 10 umfasst. Zudem ist in dem Dorn 11 und der Spannzange 10 jeweils ein Schlitz 9 ausgebildet. Die Spannzange 10 ist in radialer Richtung federvorgespannt und kann durch eine Automatik entspannt werden.

In dem entspannten Zustand der Dornvorrichtung 4 kann ein Werkstück 1 auf die Dornvorrichtung aufgesetzt werden. Das Werkstück 1 ist in dem Ausführungsbeispiel ein Kugelkopf eines künstlichen Hüftgelenks. Das Werkstück 1 weist einen kugelförmigen Werkstückoberflächenabschnitt 2 auf, der endbearbeitet wird. Zudem weist das Werkstück 1 eine konische Aufnahmebohrung 3 auf, mit der das Werkstück 1 auf die Dornvorrichtung 4 aufgesetzt ist.

Die Endbearbeitungsvorrichtung umfasst zudem eine Greifvorrichtung 5 mit mehreren Greifelementen 6. Die Greifelemente 6 der Greifvorrichtung 5 können sowohl in vertikaler Richtung als auch in radialer Richtung zu der Dornvorrichtung 4 bewegt werden.

Die Greifelemente 6 der Greifvorrichtung 5 weisen jeweils einen Auflagebereich 7 und einen Eingriffsbereich 8 auf. Zum Abnehmen des Werkstücks 1 von der Dornvorrichtung 4 wird der Eingriffsbereich 8 in die Aufnahmebohrung 3 eingebracht, wobei der Eingriffsbereich 8 durch einen Schlitz 9 in der Dornvorrichtung 4 durchgeführt wird. Die Greifelemente 6 werden insbesondere so bewegt, dass der Eingriffsbereich 8 mit einer Innenumfangsfläche der Aufnahmebohrung 3 in Anlage kommt und dass der die Aufnahmebohrung 3 umgebende ringförmige Oberflächenabschnitt des Werkstücks 1 abschnittsweise auf dem Auflagebereich 7 des Greifelements 6 aufliegt. Es ist somit möglich, dass das Werkstück 1 von der Dornvorrichtung 4 abgenommen werden kann, ohne dass der endbearbeitete Werkstückoberflächenabschnitt 2 von der Greifvorrichtung 4 berührt wird. Somit werden Spuren auf dem endbearbeiteten Werkstückoberflächenabschnitt 2 verhindert.

### Bezugszeichenlisten

- 1: Werkstück
- 2: Werkstückoberflächenabschnitt
- 3: Aufnahmebohrung
- 4: Dornvorrichtung
- 5: Greifvorrichtung
- 6: Greifelement
- 7: Auflagebereich
- 8: Eingriffsbereich
- 9: Schlitz
- 10: Spannzange
- 11: starrer Dorn

## Patentansprüche

1. Vorrichtung zur Endbearbeitung eines Werkstücks (1), wobei das Werkstück (1) einen sphärischen Werkstückoberflächenabschnitt (2) und eine Aufnahmebohrung (3) aufweist, umfassend
- eine Dornvorrichtung (4), auf die das Werkstück (1) mit der Aufnahmebohrung (3) aufsetzbar ist, und
- eine Bearbeitungsstation, in der der sphärische Werkstückoberflächenabschnitt (2) des auf die Dornvorrichtung (4) aufgesetzten Werkstücks (1) endbearbeitbar ist,
**dadurch gekennzeichnet, dass** die Vorrichtung eine Greifvorrichtung (5) mit mehreren Greifelementen (6) zum Abnehmen des Werkstücks (1) von der Dornvorrichtung (4) aufweist, wobei die Greifelemente (6) so ausgebildet sind, dass die Greifelemente (6) beim Abnehmen ausschließlich mit Flächen des Werkstücks (1) in Kontakt kommen, die nicht endbearbeitet sind, wobei mindestens ein Greifelement (6) einen Eingriffsbereich (8) aufweist, der in die Aufnahmebohrung (3) einführbar ist.

2. Vorrichtung nach Anspruch 1, wobei mindestens ein Greifelement (6) einen Auflagebereich (7) aufweist, auf der eine an die Aufnahmebohrung (3) angrenzende plane Fläche des Werkstücks (1) beim Abnehmen aufliegt.

3. Vorrichtung nach Anspruch 1 oder 2, wobei der Eingriffsbereich (8) des Greifelements (6) beim Abnehmen in Kontakt mit einer Innenumfangsfläche der Aufnahmebohrung (3) bringbar ist.

4. Vorrichtung nach einem der vorhergehenden Ansprüche, wobei die Dornvorrichtung (4) in ihrer axialen Richtung verlaufende Schlitze (9) aufweist, in die die Greifelemente (6) während des Abnehmens eingreifen.

5. Vorrichtung nach einem der vorhergehenden Ansprüche, wobei die Dornvorrichtung (4) eine von der Vorrichtung automatisch betätigbare Spannzange (10) umfasst.

6. Vorrichtung nach einem der vorhergehenden Ansprüche, wobei in der Bearbeitungsstation ein Werkzeug zur Finishbearbeitung des Werkstücks (1) eine zweites Werkzeug zum Fertigpolieren des Werkstücks (1) vorgesehen ist.

7. Vorrichtung nach einem der vorhergehenden Ansprüche, wobei die Vorrichtung einer Halterung für die Dornvorrichtung (4) umfasst, wobei die Halterung mittels eines Antriebs rotatorisch antreibbar ist.

8. Vorrichtung nach einem der vorhergehenden Ansprüche, wobei ein Werkzeughalter der Bearbeitungsstation auf die Werkstückoberfläche zustellbar und rotatorisch antreibbar ist.

## Claims

1. A device for finishing a workpiece (1), wherein the workpiece (1) comprises a spherical workpiece surface section (2) and a mounting hole (3), comprising:
- a mandrel-type device (4), onto which the workpiece (1) can be mounted with the mounting hole (3), and
- a processing station, in which the spherical workpiece surface section (2) of the workpiece (1) mounted on the mandrel-type device (4) can be finished,
**characterised in that** the device comprises a gripping device (5) with a plurality of gripping elements (6) for removing the workpiece (1) from the mandrel-type device (4), wherein the gripping elements (6) are constituted such that the gripping elements (6) come into contact during removal solely with the surfaces of the workpiece (1) which are not finished, wherein at least one gripping element (6) comprises an engagement area (8) which can be fed into the mounting hole (3)

2. The device according to claim 1, wherein at least one gripping element (6) comprises a support area (7), on which a flat surface of the workpiece (1) adjacent to the mounting hole (3) rests during removal.

3. The device according to claim 1 or 2, wherein the engagement area (8) of the gripping element (6) can be brought into contact with an inner circumferential surface of the mounting hole (3) during removal.

4. The device according to any one of the preceding claims, wherein the mandrel-type device (4) comprises slots (9) running in its axial direction, into which slots the gripping elements (6) engage during removal.

5. The device according to any one of the preceding claims, wherein the mandrel-type device (4) comprises a chuck (10) which can be automatically actuated by the device.

6. The device according to any one of the preceding claims, wherein a tool for finishing the workpiece (1) and a second tool for the final polishing of the workpiece (1) are provided in the processing station.

7. The device according to any one of the preceding claims, wherein the device comprises a mount for the mandrel-type device (4), wherein the mount can be driven in rotation by means of a drive.

8. The device according to any one of the preceding claims, wherein a tool holder of the processing station can be advanced to the workpiece surface and can be driven in rotation.

## Revendications

1. Dispositif pour l'usinage de finition d'une pièce (1), dans lequel la pièce (1) présente un tronçon de surface de pièce sphérique (2) et un alésage de réception (3), comprenant
- un dispositif de mandrin (4) sur lequel la pièce (1) peut être placée avec l'alésage de réception (3), et
- un poste d'usinage dans lequel le tronçon de surface de pièce sphérique (2) de la pièce (1) placée sur le dispositif de mandrin (4) peut être fini d'usiner,
**caractérisé en ce que** le dispositif présente un dispositif de préhension (5) avec plusieurs éléments de préhension (6) pour enlever la pièce (1) du dispositif de mandrin (4), dans lequel les éléments de préhension (6) sont ainsi conçus que les éléments de préhension (6), lors de l'enlèvement, sont exclusivement en contact avec des surfaces de la pièce (1) qui ne sont pas finies d'usiner, dans lequel au moins un élément de préhension (6) présente une zone d'engrènement (8) qui peut être introduite dans l'alésage de réception (3).

2. Dispositif selon la revendication 1, dans lequel au moins un élément de préhension (6) présente une zone d'appui (7), sur laquelle une surface plane de la pièce (1) délimitée contre l'alésage de réception (3) repose lors de l'enlèvement.

3. Dispositif selon la revendication 1 ou 2, dans lequel la zone d'engrènement (8) de l'élément de préhension (6) peut être amenée en contact avec une surface périphérique intérieure de l'alésage de réception (3) lors de l'enlèvement.

4. Dispositif selon l'une des revendications précédentes, dans lequel le dispositif de mandrin (4) présente une encoche (9) passant dans sa direction axiale, dans laquelle les éléments de préhension (6) s'engrènent pendant le prélèvement.

5. Dispositif selon l'une des revendications précédentes, dans lequel le dispositif de mandrin (4) comprend une pince de serrage (10) pouvant être actionnée automatiquement par le dispositif.

6. Dispositif selon l'une des revendications précédentes, dans lequel dans le poste d'usinage, un outil est prévu pour la finition de la pièce (1) et un second outil est prévu pour polir la pièce (1).

7. Dispositif selon l'une des revendications précédentes, dans lequel le dispositif comprend une fixation pour le dispositif de mandrin (4), dans lequel la fixation peut être entraînée en rotation au moyen d'un entraînement.

8. Dispositif selon l'une des revendications précédentes, dans lequel un support d'outil du poste d'usinage peut être placé et entraîné en rotation sur la surface de la pièce.
